## Europäisches Patentamt

## European Patent Office

## Office européen des brevets

(11) Veröffentlichungsnummer: **0 279 285**

**A1**

## (12) EUROPÄISCHE PATENTANMELDUNG

(21) Anmeldenummer: **88101590.3**

(22) Anmeldetag: **04.02.88**

(51) Int. Cl.⁴: **A01B 49/06**

(30) Priorität: **17.02.87 DE 3704961**

(43) Veröffentlichungstag der Anmeldung:
**24.08.88 Patentblatt 88/34**

(84) Benannte Vertragsstaaten:
**AT DE FR GB IT NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Steenken, Bernd**
**Waldhöfe 17**
**D-4475 Sögel 2(DE)**
Erfinder: **Siefken, Claus**
**Preussenweg 27**
**D-2872 Hude 1(DE)**
Erfinder: **Feldhaus, Werner**
**Huntloser Strasse 25**
**D-2879 Gevershausen(DE)**
Erfinder: **Gattermann, Bernd**
**Eichenwall 3**
**D-2872 Hude 1(DE)**

(54) **Geschlossene Gerätekombination.**

(57) Geschlossene Gerätekombination, bestehend aus einer Bodenwalze und einer Sämaschine, wobei die Sämaschine einen Rahmen aufweist, an dem die Säschare angelenkt sind und sich hinter der Bodenwalze befinden. Um bei einer gattungsgemäßen Gerätekombination auch bei schwierigsten Einsatzverhältnissen eine sichere Funktion der Sämaschine zu gewährleisten, ist vorgesehen, daß zwischen der Bodenwalze (1) und den Säscharen (11) ein zumindest annähernd über die gesamte Breite der Sämaschine (2) reichendes, vorzugsweise aufrecht stendes Schutzschild (15) angeordnet ist

FIG.1

## Geschlossene Gerätekombination

Die Erfindung betrifft eine geschlossene Gerätekombination gemäß des Oberbegriffes des Patentanspruches 1.

Eine derartige Gerätekombination ist durch die deutsche Patentschrift 32 14 897 bekannt. Diese Gerätekombination besteht aus einer Bodenwalze, die hinter einem Bodenbearbeitungsgerät befindet sich, wobei hinter der Bodenwalze eine Sämaschine angeordnet ist. Die Sämaschine weist einen Rahmen auf, an dem die Säschare angelenkt sind und sich hinter der Bodenwalze befinden. Bei dieser bekannten Gerätekombination ist die Scharhalteschiene, die Teil des Rahmens der Sämaschine ist und an welcher die Säschare angelenkt sind, sehr dicht hinter der Bodenwalze angeordnet. Teilweise wird von der Bodenwalze Erde nach hinten und nach oben mit hochgenommen, vor allem wenn Bodenwalzen eingesetzt werden, die keine Abstreifer oder sehr hoch angesetzte Abstreifer aufweisen, so daß dann der von der Bodenwalze sehr hoch mit nach oben mitgenommene Boden auf die Scharhalterung und auf die zwischen den Säscharen und dem Rahmen der Sämaschine angeordneten Schardruckfedern fällt. Hierdurch wird teilweise die Funktion der Schardruckfedern stark beeinträchtigt.

Der Erfindung liegt die Aufgabe zugrunde, bei einer gattungsgemäßen Gerätekombination auch bei schwierigsten Einsatzverhältnissen eine sichere Funktion der Sämaschine zu gewährleisten.

Diese Aufgabe wird erfindungsgemäß dadurch gelöst, daß zwischen der Bodenwalze und den Säscharen ein zumindest annähernd über die gesamte Breite der Sämaschine reichendes, vorzugsweise aufrecht stehendes Schutzschild angeordnet ist. Durch das zwischen den Säscharen und der Bodenwalze angeordnete Schutzschild wird in äußerst einfacher Weise erreicht, daß kein von der Bodenwalze nach oben mitgenommener Boden und nach hinten geworfener Boden auf die Scharhalterung bzw. an die den Säscharen zugeordneten Schardruckfedern gelangt. Dieser von der Bodenwalze mitgenommene Boden wird durch das Schutzschild von der Sämaschine ferngehalten. Außerdem kann das Schutzschild zur Aussteifung des Rahmens der Sämaschine beitragen.

Des weiteren ist erfindungsgemäß vorgesehen, daß das Schutzschild derart angeordnet ist, daß sich der Spalt zwischen dem Schutzschild und der Bodenwalze ständig nach oben erweitert. Infolge dieser Maßnahme wird sichergestellt, daß in jedem Falle sich ein nach oben erweiternder Raum zwischen dem Seitenschild und der Bodenwalze ergibt, so daß in keinem Falle sich der von der Bodenwalze nach oben mitgenommene Boden zwischen der Bodenwalze und dem Schutzschild festkeilen kann. Es wird also in jedem Falle ein Blockieren der Bodenwalze aufgrund sich zwischen der Bodenwalze und dem Schutzschild einkeilendem Boden ausgeschlossen.

Selbstverständlich läßt sich, um das erfindungsgemäße Ziel zu erreichen, das Schutzschild entweder an dem Rahmen der Sämaschine oder aber an dem Rahmen der Bodenwalze anordnen.

Vor allem ist es von sehr großer Bedeutung, ein Schutz schild zwischen der Bodenwalze und der Sämaschine anzuordnen, wenn die Sämaschine auf eine Bodenwalze unmittelbar aufgesattelt ist. Hierdurch läßt sich eine äußerst kompakte Bauweise von Sämaschine und Bodenwalze und der zugehörigen Säschare erreichen, da die Säschare so dicht wie möglich hinter der Bodenwalze angeordnet werden können, da das Schutzschild die Verschmutzung der Säschare bzw. der Lagerung oder der Schardruckfedern vermeidet. Es ist nicht erforderlich, wie bisher, um eine einwandfreie Funktion der Sämaschine bzw. Teile der Sämaschine, insbesondere der Säschare und der Schardruckfedern zu gewährleisten, daß die Säschare in einem großen Abstand zu der Bodenwalze angeordnet sind, sondern vielmehr können die Scharhalterungen der Säschare und die Schardruckfedern sehr dicht hinter der Bodenwalze, also unmittelbar und in unmittelbarer Nähe hinter dem Schutzschild angeordnet werden. Insbesondere ist es unabdingbar, ein Schutzschild hinter einer Gummireifenwalze vorzusehen, da bei einer derartigen Walze keine Abstreifer wie bei den herkömmlichen Packerwalzen vorgesehen sind, die bei den Packerwalzen den Boden unmittelbar nach dem Ausheben aus dem Boden abstreifen.

Damit in jedem Falle der von der Bodenwalze mit hochgenommene Boden von den Säscharen oder Schardruckfedern ferngehalten wird, ist erfindungsgemäß vorgesehen, daß die Unterkante des Schutzschildes zumindest bis zur Unterkante der Gelenke der Säschare und die Oberkante des Schutzschildes zumindest etwa bis zu 3/4 der Höhe der Walze reicht.

Weitere Einzelheiten der Erfindung sind den übrigen Unteransprüchen, der Beispielsbeschreibung und den Zeichnungen zu entnehmen. Hierbei zeigen

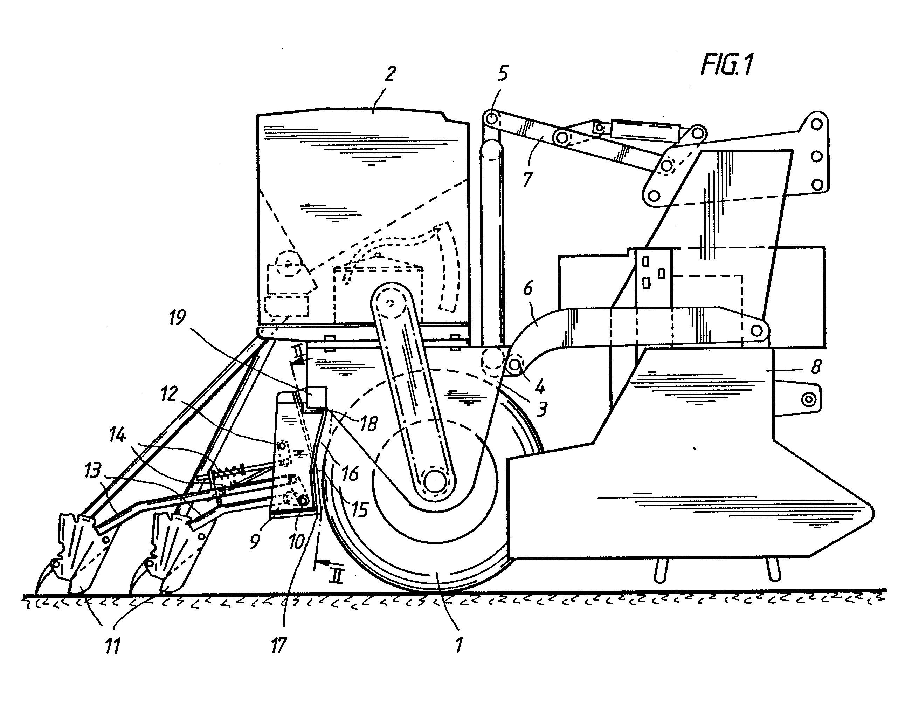

Fig. 1 eine erfindungsmäß ausgebildete Gerätekombination in der Seitenansicht und

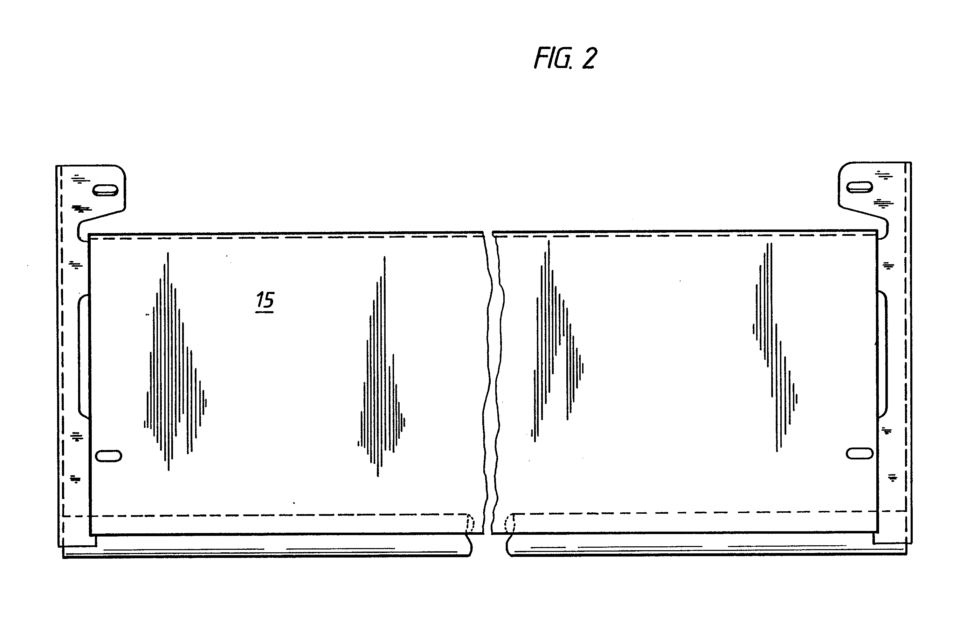

Fig. 2 das Schutzschild, welches zwischen der Nachlaufwalze und den Säscharen angeordnet ist in der Ansicht II-II.

Die Gerätekombination besteht aus der Bodenwalze 1 und der auf der Bodenwalze 1 aufgesattelten Sämaschine 2. Die Bodenwalze 1 und die Sämaschine 2 bilden also somit eine Gerätekombination, welche auch als Kompaktsämaschine zu bezeichnen ist. Die Bodenwalze 1 weist den Rahmen 3, welcher auf seiner Vorderseite mit den unteren Dreipunktkupplungselementen 4 und den oberen Dreipunktkupplungselementen 5 ausgestattet ist, auf. Mittels der unteren beiden Tragarme 6 und dem oberen Tragarm 7 ist die Bodenwalze 1 mit der Sämaschine 2 hinter der zapfwellenangetriebenen Bodenbearbeitungsmaschine 8, welche als zapfwellengetriebene Kreiselegge 8 ausgebildet ist, angeordnet.

An dem Rahmen 3 der Bodenwalze 1 ist mittels der beiden seitlichen Halterungen 9 die Scharhalteschiene 10, an welcher die Säschare 11 in aufrechter Ebene bewegbar angelenkt sind, angeordnet. Des weiteren ist an den beiden seitlichen Halterungen 9 die zentrale Schardruckverstellungsschiene 12 angeordnet. Zwischen der Schardruckverstellschiene 12 und den Scharhaltern 13 des Säschare 11 sind die Schardruckfedern 14 angeordnet.

Zwischen der Bodenwalze 1 und den Säscharen 11 ist das über die gesamte Breite der Sämaschine 2 reichende und aufrecht stehend angeordnete Schutzschild 15 angeordnet. Das Schutzschild 15 ist an den beiden seitlichen Halterungen 9, welche an dem Rahmen 3 der Bodenwalze 1 befestigt sind, mit Hilfe von Schrauben angeordnet.

Das Schutzschild 15 ist derart angeordnet, daß sich der Spalt 16 zwischen dem Schutzschild und der Bodenwalze 1 ständig nach oben erweitert. Der Spalt 16 vergrößert sich also in Drehrichtung der Bodenwalze 1 keilförmig nach oben, so daß in den Spalt 16 von der Bodenwalze nach oben mitgenomme Boden und Pflanzenreste aufgelockert werden und sich nicht in dem Spalt 16 festkeilen können. Außerdem wirkt die untere Kante 17 des Schutzschildes 15 als Abstreifer für an der Bodenwalze anhaftende Erde. Die untere Kante 17 des Schutzschildes 15 kann tiefer nach unten gezogen sein, als dies in der Zeichnung dargestellt ist, damit schon möglichst früh die an der Bodenwalze anhaftende Erde abgestreift wird.

Die Bodenwalze 1 besteht aus nebeneinander aufgereihten Gummireifen. Der Rahmen vor allem die Scharhalteschiene 10, an der die Säschare 11 angelenkt sind, ist sehr dicht hinter dem Schutzschild 15 angeordnet. Aufgrund des Schutzschildes 15 kann die Scharhalteschiene 10 mit den Gelenken, an denen die Säschare 11 angelenkt sind und den Schardruckfedern 14 sehr dicht hinter der Bodenwalze 1 angeordnet werden, ohne daß die Gefahr besteht, daß von der Bodenwalze nach oben mitgenommener Boden und Pflanzenreste die Scharschiene 10 oder die Schardruckfedern 14 verschmutzen. Die Unterkante 17 des Schutzschildes 15 reicht zumindest bis zur Unterkante der Gelenke der Säschare 11. Die Oberkante 18 des Schutzschildes 15 bzw. der sich unmittelbar an dem Schutzschild 15 anschließende Querträger 19 des Rahmens 3 der Nachlaufwalze 1 reichen bis etwa zu 3/4 der Höhe der Bodenwalze 1. Durch diese hohe Lage der Oberkante 18 des Schutzschildes 15 wird erreicht, daß evtl. sich in lockerer Form in dem Spalt 16 befindener Boden nicht nach hinten auf die Scharhalteschiene 10 oder die Schardruckfedern 14 fällt, sondern vielmehr von der Bodenwalze 1 mit nach vorn mitgenommen wird und so in den Zwischenraum zwischen der Bodenwalze 1 und der Kreiselegge 8 fällt.

## Ansprüche

1. Geschlossene Gerätekombination, bestehend aus einer Bodenwalze und einer Sämaschine, wobei die Sämaschine einen Rahmen aufweist, an dem die Säschare angelenkt sind und sich hinter der Bodenwalze befinden, dadurch gekennzeichnet, daß zwischen der Bodenwalze (1) und den Säscharen (11) ein zumindest annähernd über die gesamte Breite der Sämaschine (2) reichendes, vorzugsweise aufrecht stendes Schutzschild (15) angeordnet ist.

2. Gerätekombination nach Anspruch 1, dadurch gekennzeichnet, daß das Schutzschild (15) derart angeordnet ist, daß sich der Spalt (16) zwischen dem Schutzschild (15) und der Bodenwalze (1) ständig nach oben erweitert.

3. Gerätekombination nach Anspruch 1, dadurch gekennzeichnet, daß das Schutzschild einstellbar angeordnet ist.

4. Gerätekombination nach Anspruch 1, dadurch gekennzeichnet, daß das Schutzschild an dem Rahmen der Sämaschine angeordnet ist.

5. Gerätekombination nach Anspruch 1, dadurch gekennzeichnet, daß das Schutzschild (15) an dem Rahmen (3) der Bodenwalze (1) angeordnet ist.

6. Gerätekombination nach Anspruch 1, dadurch gekennzeichnet, daß die Sämaschine auf die Bodenwalze aufgesattelt ist.

7. Gerätekombination nach Anspruch 1, dadurch gekennzeichnet, daß vor der Bodenwalze ein angetriebenes Bodenbearbeitungsgerät angeordnet ist.

8. Gerätekombination nach Anspruch 1, dadurch gekennzeichnet, daß der Rahmen (10), an dem die Säschare (11) angelenkt sind, dicht hinter dem Schutzschild (15) angeordnet ist.

9. Gerätekombination nach Anspruch 1, dadurch gekennzeichnet, daß die Bodenwalze als Gummireifenwalze ausgebildet ist.

5     **0 279 285**     6

10. Gerätekombination nach Anspruch 1, dadurch gekennzeichnet, daß die Unterkante (17) des Schutzschildes (15) zumindest bis zur Unterkante der Gelenke der Säschare und die Oberkante des Schutzschildes zumindest etwa bis zu 3/4 der Höhe der Walze reicht.

FIG.1

0 279 285

FIG. 2

15

AMAZONEN-WERKE H.DREYER GmbH & Co.KG

0 279 285

Europäisches
Patentamt

**EUROPÄISCHER RECHERCHENBERICHT**

Nummer der Anmeldung

EP 88 10 1590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 322 524 (HOWARD MACHINERY LTD) * Seite 2, Zeilen 34-37; Figuren 2,3 * --- | 1 | A 01 B 49/06 |
| A | FR-A-2 414 856 (H. NIEMEYER SOHNE GmbH & CO. KG) ----- | | |

RECHERCHIERTE
SACHGEBIETE (Int. Cl.4)

A 01 B

Der vorliegende Recherchenbericht wurde für alle Patentansprüche erstellt

| Recherchenort | Abschlußdatum der Recherche | Prüfer |
|---|---|---|
| DEN HAAG | 03-05-1988 | VERDOODT S.J.M. |